# EUROPÄISCHE PATENTANMELDUNG

(11) **EP 1 022 913 A2**
(43) Veröffentlichungstag der Anmeldung: **26.07.2000**
(21) Anmeldenummer: 99122969.1
(22) Anmeldetag: 18.11.1999
(51) Int. Cl.: H04N 9/12, H04N 9/31

(54) **Videoprojektionssystem zur Projektion von mehr als einem Bild**

(30) Priorität: 20.01.1999 DE 19902110
(71) Anmelder: LDT GmbH & Co. Laser-Display-Technologie KG, 07548 Gera (DE)
(72) Erfinder: Deter, Christhard, 07546 Gera (DE)
(74) Vertreter: Geyer, Werner, Dr.-Ing.

(57) **Zusammenfassung**

Die Erfindung betrifft ein Videoprojektionssystem zur Projektion von mehr als einem Bild, bei dem in Lichtrichtung eines Strahlenganges eine Lichtquelle zur Erzeugung mindestens eines Lichtbündels, Mittel zur Intensitätsmodulation und Mittel zur räumlichen Lichtbündel-Modulation, wobei diese Mittel von einem Videosignal angesteuert werden, und mindestens eine Projektionsfläche zur Darstellung einer bestimmten Anzahl (n) von Einzelbildern angeordnet sind.

Sie ist dadurch gekennzeichnet, daß das Videoprojektionssystem eine der Anzahl (n) der Einzelbilder (55, 56, 57) entsprechende Anzahl (n) Projektoren (115, 116, 117) umfaßt, deren jeder ein Mittel zur räumlichen Lichtbündel-Modulation (35, 36, 37) aufweist und diese Mittel mit der Lichtquelle (100) optisch verbunden sind, weiterhin - in Lichtrichtung des Strahlenganges gesehen - nach der einen Lichtquelle (100) ein Mittel zur Aufteilung (111) des Lichtbündels (1) in eine der Anzahl der Projektoren entsprechende Anzahl (n) von Teil-Lichtbündeln (2, 3, 4), deren jedes einen Teil-Strahlengang aufweist und nachfolgend in jedem der Teil-Strahlengänge ein Mittel zur Intensitätsmodulation (25, 26, 27) angeordnet ist, wobei jeweils das Mittel zur Intensitätsmodulation (25, 26 oder 27) und das Mittel zur räumlichen Lichtbündel-Modulation (35, 36 oder 37), die in einem der Teil-Strahlengänge (15, 16 oder 17) angeordnet sind, von den Signalen (A, B, C) einer Videoquelle (105, 106, 107) angesteuert werden.

## Beschreibung

Die Erfindung betrifft ein Videoprojektionssystem zur Projektion von mehr als einem Bild, bei dem in Lichtrichtung eines Strahlenganges eine Lichtquelle zur Erzeugung mindestens eines Lichtbündels, Mittel zur Intensitätsmodulation und Mittel zur räumlichen Lichtbündel-Modulation, wobei diese Mittel von einem Videosignal angesteuert werden, und mindestens eine Projektionsfläche zur Darstellung einer bestimmten Anzahl von Einzelbildern angeordnet sind.

Bekannt sind Projektoren mit Lichtquellen, die auf zwei Grundprinzipien zurückgeführt werden können:
1. Projektoren, die auf dem klassischen Abbildungsprinzip beruhen, z.B. LCD- und DLP-Projektoren. Sie werden nachfolgend als "bild-abbildende Projektoren" bezeichnet.
2. Projektoren, die mit einem in Zeilenrichtung und in Bildrichtung abgelenkten Lichtbündeln arbeiten. Diese werden zum Beispiel auch als "Laser-Display" oder "Laser-Projektor" bezeichnet.

Die genannten Projektoren können ausschließlich für die monochrome Bilddarstellung oder auch für die Darstellung eines Schwarz-Weiß-Bildes ausgelegt sein. In diesen Fällen ist es ausreichend, die elektronische Bildinformation in eine Intensitäts- oder Helligkeitsmodulation des Lichts umzusetzen. Der Bildeindruck hängt zunächst von der Einstellung der Bildhelligkeit, bezogen zu den Umgebungslichtbedingungen, ab. Die maximale Bildhelligkeit wird durch die zu 100% modulierte Lichtleistung begrenzt. Der Bildeindruck wird weiterhin durch die Höhe des Kontrastes bestimmt. Bei der Einstellung des Kontrastes wird der Modulationshub festgelegt, d.h. es erfolgt eine Zuordnung der Grauwerte des Videosignals zu entsprechend modulierten Lichtleistungen.

Sollen mehrere nebeneinander gestellte Projektoren des gleichen Typs gleichartige Bilder darstellen, genügt es hier noch die Parameter Helligkeit, Kontrast und spektrale Intensitätsverteilung der Projektoren zueinander zu justieren. Bei vier Projektoren für vier Bilder bedeutet das 12 Einstellmöglichkeiten zur Justage.

Weiterhin muß sichergestellt werden, daß die Mittel zur Bildmodulation und ihre zugehörige Ansteuerelektronik in den Projektoren mit einer völlig gleichen Kennlinien arbeiten. Nur so wird praktisch erreicht, daß mehrere Projektoren, die eine gleiche Videoinformation erhalten, auch gleiche Bilder darstellen.

Bei der Erzeugung eines Farbbildes sind die Freiheitsgrade zur Einstellung der Projektoren gleich 3-fach erhöht. Bei einem Farbbild-Projektor ist dieses so zu erklären, daß praktisch drei verschiedenfarbige monochrome Systeme zusammengefaßt sind, ein System für die Primärfarbe Rot, ein System für die Primärfarbe Grün und ein System für die Primärfarbe Blau. Somit ergeben sich 9 Einstellmöglichkeiten, um die Farbwirkung, den Kontrast und die Helligkeit eines Bildes einzustellen. Bei vier Projektoren ergeben sich somit allein hieraus 36 Freiheitsgrade zur Justage! Die für den menschlichen Gesichtssinn relevanten Bildeigenschaften, die bei mehreren Projektoren weitestgehend identisch sein müssen sind: Kontrast (Hell-Dunkel-Verhältnis), Gradation (Kanalabstufung), Konvergenz (Farbüberdeckung), Bildschärfe, Bildzusammensetzung (Pixelstruktur), Helligkeit (Leuchtdichte), Buntheit (Sättigung) und Buntton (Farbton). Insbesondere Farbunterschiede (Farbvalenzunterschiede) zwischen Projektoren, die Bilder unmittelbar nebeneinander projizieren, werden von einem menschlichen Beobachter äußerst empfindlich festgestellt. In der Praxis ist die Aufgabe, die Projektionseigenschaften mehrerer Projektoren in diese weitestgehende Übereinstimmung zu bringen, nur mit erheblichen technischen, finanziellen personellen und zeitlichen Aufwand lösbar.

Zur Projektion von großformatigen Bildern werden üblicherweise mehrere Einzelbilder zu einem Gesamtbild zusammengesetzt. Dabei wird jedes einzelne Einzelbild mittels eines kompletten Projektors erzeugt.

Bekannt sind zum Beispiel Anordnungen, die aus mehreren LCD-Projektoren bestehen. Gemäß der EP 0 731 603 A2 enthält jeder dieser Projektoren eine Weißlichtquelle, aus der die drei Primärfarben Rot, Grün und Blau ausgefiltert werden. Es sind auch Ausführungen bekannt, bei denen drei Lichtquellen enthalten sind, jeweils eine Lichtquelle zur Gewinnung einer Primärfarbe. Diese Lichtquellen sind Temperaturstrahler. Diese Lösungen, die Temperaturstrahler verwenden, weisen wesentliche Mängel auf. Der Betrachter der projizierten Bildszene erwartet, daß ihm ein gleichmäßiges Bild in Helligkeit und Farbdarstellung geboten wird.

Das ist jedoch nicht realisierbar, wenn jeder Projektor, der ein Einzelbild erzeugt, über eine eigene Lichtquelle verfügt. Es ist nicht zu erwarten, daß die Helligkeit der eigenständigen Lichtquellen jeder der Projektoren und ihre Farbwiedergabeeigenschaften wirklich gleich ist und auf Dauer wirklich gleich bleibt.

Ein Hauptproblem ist, daß die Projektionslampen unterschiedlich altern und in diesem Prozeß nicht vorhersehbare Veränderungen der spektralen Intensitätsverteilung auftreten. Untersuchungen haben gezeigt, daß die Farbtemperatur einzelner Projektionslampen auch des gleichen Typs und eines gleichen Alters erhebliche Unterschiede in ihrer Strahlungscharakteristik aufweisen. Dadurch entstehen unterschiedliche Farbwiedergaben der einzelnen Projektoren für das zugehörige Einzelbild. Im Prozeß der Alterung verändern sich die Farbtemperaturen der einzelnen Projektionslampen sehr unterschiedlich.

Eine weitere Quelle für Unterschiede in der spektralen Intensitätsverteilung sind Unterschiede und Toleranzen in der Stromversorgung für die einzelnen Lichtquellen bzw. der Kathodenstrahlröhren der Projektoren. Alle diese negativen Einflüsse führen dazu, daß ein erheblicher zeitlicher und materieller Aufwand durch den Betreiber einer solchen Anlage benötigt wird, um einen Abgleich der Helligkeit und der Farbwirkung in den einzelnen Projektoren herbeizuführen und aufrecht zu erhalten. In der Praxis muß erreicht werden, daß das aus den Einzelbildern zusammengesetzte Bild zumindest bescheidenen Qualitätsansprüchen genügt. Das Abstimmen der einzelnen Projektoren ist ein sehr aufwendiger und komplizierter Prozeß. Erhöht man z. B. die Helligkeit in dem man die Versorgungsspannung bzw. den Versorgungsstrom einer Projektionslampe ändert, verändert sich ebenso die Farbtemperatur. Diesen Einfluß kann man nur durch einen neuen Farbabgleich des Projektors ausgleichen. Bei Ausfall einer Projektionslampe und Ersatz durch eine neue wird dieser Vorgang noch viel aufwendiger, da die neue Projektionslampe sich in Lichtleistung und Farbtemperatur wesentlich von denen unterscheidet, die schon eine lange Einsatzdauer haben. So ist es oft erforderlich bei Ausfall einer Projektionslampe gleich den Ersatz aller Projektionslampen im System durchzuführen. Das wiederum verursacht erhebliche Kosten.

Weiterhin ist aus der EP 0 589 179 bekannt, daß die Projektionslampen (Temperaturstrahler) in bild-abbildenden Projektoren durch Laser-Lichtquellen ersetzt werden können. Laser-Lichtquellen haben gegenüber Temperaturstrahlern den Vorteil, daß diese Licht in definierten Wellenlängen ausstrahlen. Das heißt, verschiedene Laser-Lichtquellen einer Art emittieren Licht genau der gleichen Wellenlänge. Dies ist zunächst ein großer Vorteil, da die spektrale Intensitätsverteilung bei Laser-Lichtquellen gleicher Bauart gleich ist.

Jedoch bereitet es auch hier schon bei einem monochromen Projektionssystem Schwierigkeiten, und es erfordert einen erhöhten technischen Aufwand, mehrere Laser-Lichtquellen für die Einzelbilder so zu betreiben, daß das Gesamtbild einen gleichmäßigen Helligkeitseindruck erzeugt.

Ein bild-abbildendes Laser-Projektionssystem das farbige Bilder erzeugt, benötigt auch jeweils drei Laser-Lichtquellen in den Primärfarben Rot, Grün und Blau für jeden Projektor. Als Beispiel wird ein DLP-System gemäß der EP 0 589 179 A1 angeführt, bei dem drei Laser-Lichtquellen Laser-Lichtbündel verschiedener Wellenlängen erzeugen. Die Lichtbündel werden räumlich zusammengeführt und mittels einer Optik auf die Größe eines DMD-Arrays aufgeweitet. Ein Projektionsobjektiv bildet das DMD-Array auf der Projektionsfläche ab.

Bei einer Mehrfachanordnung dieser Projektoren müssen die Verhältnisse der Intensitäten der drei Laser-Lichtquellen eines Projektors zueinander und die maximale Größe der Intensitäten (Bildhelligkeit) und der Modulationshub (Kontrast) jeder der Projektoren genau aufeinander abgeglichen werden. Besondere Probleme bereitet hier die Aufweitung jedes Laser-Lichtbündels auf die Größe des DMD-Arrays, um eine homogene, gleichmäßig starke Ausleuchtung der gesamten Fläche der geräteinternen Objektebenen der einzelnen Projektoren zu erreichen.

Obwohl man annehmen müßte, daß durch die definierten Wellenlängen der Laser-Lichtquellen eine Vereinfachung der Einstellungen auftritt, wird es auch hier nur mit erheblichen Aufwand beherrscht, die Rot-Grün-Blau-Laser-Lichtquellen mehrerer Projektoren so abzugleichen, daß alle Bilder annähernd die gleichen Wiedergabeeigenschaften für ein farbiges Bild haben.

Weiterhin sind Projektoren bekannt (z.B. US-PS 5 424 771), die mit einem schreibenden Lichtbündel arbeiten. Ein Hauptvorteil dieser Laser-Projektoren gegenüber bild-abbildenden Projektoren besteht darin, daß ein nahezu paralleles Laser-Lichtbündel das Bild zeilenweise aufbaut und somit eine optische Abbildung eines Bildgegenstandes, aus einer Objektebene heraus in eine Bildebene hinein, nicht erfolgt. Die Probleme der Einstellung der gleichen Wiedergabeeigenschaften mehrerer Projektoren sind aber nur geringfügig geringer, als diese im vorhergehenden Absatz beschrieben sind. Als Hauptvorteil kommt hier zur Wirkung, daß mit einem schreibenden Lichtbündel arbeitende Projektoren keine geräte-interne Objektebene besitzen, somit das Problem einer gleichmäßigen Ausleuchtung einer Objektebene nicht steht. Derartige Projektoren haben weiterhin den Vorteil einer nahezu unbegrenzten Schärfentiefe, so daß die Bilder dieser Projektoren immer scharf sind.

Versuche haben jedoch auch hier gezeigt, daß mehrere Projektoren trotz Ansteuerung mit einem gleichen Videosignal sichtbare Unterschiede in der Bildwiedergabe aufweisen, die sich durch die neun Freiheitsgrade in der Justage pro Projektor auch nur mit relativ aufwendigen Maßnahmen reduzieren lassen.

Die Schwierigkeit, übereinstimmende Projektionseigenschaften mehrerer Projektoren zu erreichen, liegt hier insbesondere noch darin begründet, daß die Strahlparameter des Laser-Lichtbündels mehrerer gleichartiger Laser-Lichtquellen Unterschiede aufweisen. Diese Parameter sind im wesentlichen Lichtbündeldurchmesser, Divergenz, Polarisationszustand und Modenstruktur. Es gelingt hier auch nur mit zusätzlichem Aufwand, diese Parameter für verschiedene Laser-Lichtquellen hinreichend in Übereinstimmung zu bringen, um das Erscheinungsbild mehrerer Bilder gleich zu erhalten. Ein Problem besteht auch darin, daß die Arbeitsstabilität jeder der einzelnen Laser-Lichtquellen über einen längeren Zeitraum gewährleistet werden muß.

Bei Simulatoren für LKW,- Hubschrauber-, Flugzeug- und Schiffe erfolgt eine Bildprojektion auf zylindrische bzw. sphärische Flächen, um den Beobachter den horizontalen Bildwinkel so wie im realen Betrachtungsfall nachzubilden. Wegen der großen Betrachtungswinkel die erforderlich sind, um einen wirklichkeitsnahen Bildeindruck zu erhalten, wird hier ein Bild aus mehreren Einzelbildern zusammengesetzt, die aus verschiedenen Projektionseinrichtungen kommen.

In US 4,297,723 ist eine Anordnungen für eine solche Bilddarstellung mit einem Projektor dargestellt. Drei Laser-Lichtbündel in den Farben Rot, Grün und Blau werden für ein linkes Einzelbild, ein rechtes Einzelbild und ein zentrales Einzelbild jeweils getrennt intensitätsmoduliert. Das intensitätsmodulierte Licht der Farben Rot, Grün und Blau jedes Einzelbildes wird mittels chromatischer Spiegel räumlich zusammengeführt. Es entstehen drei neben einander liegende parallele Lichtbündel, die jeweils die Bildinformation für ein Einzelbild enthalten. Diese Lichtbündel werden gemeinsam mit einem zweiachsigen Ablenksystem in Zeilenrichtung und Bildrichtung abgelenkt. Anschließend sollen die drei Lichtbündel durch eine speziell ausgebildete Projektionsoptik so auf eine gewölbte Projektionsfläche abgelenkt werden, daß die drei Einzelbilder ein Gesamtbild ergeben. Die Bildprojektion des zentralen Bildes erfolgt in der Richtung, die durch das Ablenksystem vorgegeben wird. Das rechte Einzelbild und das linke Einzelbild werden durch Umlenkspiegel vom zentralen Bild räumlich getrennt. Diese Spiegel müssen sehr genau zu den Achsen der Hauptprojektionsstrahlen justiert werden, um ein einigermaßen nahtlos zusammengesetztes Gesamtbild zu erhalten. Durch die zur Bildaufteilung notwendigen Umlenkspiegel können die Projektionswinkel nicht wesentlich größer als 50° werden.

Aus technischen Gründen ist es in den meisten Fällen nicht möglich, eine Bildprojektion, z.B. für einen horizontalen Betrachtungswinkel von 200°, mit nur einer Projektionseinrichtung zu realisieren.

Es sind zwei (zum Beispiel in EP 0 210 088 B1), drei, vier oder teilweise noch mehr Projektionskanäle (zum Beispiel in EP 0 522 204 A1 oder in US 5.424.771) erforderlich, mit denen jeweils ein Einzelbild projiziert und zu einem Gesamtbild zusammengesetzt werden soll. Nach dem Stand der Technik werden dabei jeweils so viele Projektoren und so viele Lichtquellen eingesetzt, wie Projektionskanäle erforderlich sind. Die Anordnung der Projektoren erfolgt dabei so, daß die Bilder entsprechend den Erfordernissen der Bildprojektion aneinander gesetzt werden können.

Gemäß EP 0 522 204 A1 befinden sich sechs Projektoren im Zentrum einer Projektionskuppel. Es werden dort gemäß Figur 31 sechs oder noch mehr unabhängig arbeitende Rot-Grün-Blau-Laser-Lichtquellen eingesetzt, die ihrerseits jeweils drei unabhängig voneinander arbeitende Laser-Lichtquellen in den Primärfarben enthalten. Es wird eine Mehrzahl von Projektoren eingesetzt, die jeweils eine eigene Stromversorgung und Ansteuerung der Laser aufweisen.

Wie aus den obigen Ausführungen ersichtlich ist, ist es nach dem bisher erreichten Entwicklungsstand unumgänglich, für sehr große Bilder, insbesondere für eine flächenfüllende Kuppelprojektion, Mehrfachanordnungen von Projektoren zu verwenden. Derartige Anordnungen verursachen jedoch überproportionale Kostensteigerungen, die insbesondere durch die Aufwendungen für die Installation und Wartung für Projektionssysteme mit eigenen Lichtquellen hervorgerufen werden.

Die Erfindung soll das Problem lösen, ein Videoprojektionssystem zur Projektion von mehr als einem Bild zu schaffen, bei dem die Einzelbilder bezüglich der Eigenschaften Helligkeit, Kontrast und Farbwiedergabe identisch sind und während des Betriebes identisch bleiben.

Die Anschaffungskosten und der Aufwand für die Inbetriebnahme, den laufenden Betrieb und die Wartung derartiger mehrkanaliger Projektionssysteme soll drastisch reduziert werden.

Die Erfindung betrifft ein Videoprojektionssystem zur Projektion von mehr als einem Bild, bei dem in Lichtrichtung eines Strahlenganges eine Lichtquelle zur Erzeugung mindestens eines Lichtbündels, Mittel zur Intensitätsmodulation und Mittel zur räumlichen Lichtbündel-Modulation, wobei diese Mittel von einem Videosignal angesteuert werden, und mindestens eine Projektionsfläche zur Darstellung einer bestimmten Anzahl von Einzelbildern angeordnet sind. Erfindungsgemäß umfaßt dabei das Videoprojektionssystem eine der Anzahl der Einzelbilder entsprechende Anzahl Projektoren, deren jeder ein Mittel zur räumlichen Lichtbündel-Modulation aufweist, und diese Mittel sind mit der Lichtquelle optisch verbunden, weiterhin ist - in Lichtrichtung des Strahlenganges gesehen - nach der einen Lichtquelle ein Mittel zur Aufteilung des Lichtbündels in eine der Anzahl der Projektoren entsprechende Anzahl von Teil-Lichtbündeln, deren jedes einen Teil-Strahlengang aufweist, und nachfolgend in jedem der Teil-Strahlengänge ein Mittel zur Intensitätsmodulation angeordnet, wobei jeweils das Mittel zur Intensitätsmodulation und das Mittel zur räumlichen Lichtbündel-Modulation, die in einem der Teil-Strahlengänge angeordnet sind, von den Signalen einer Videoquelle angesteuert werden.

Ein Vorteil der Erfindung besteht darin, daß mehrere Projektoren nur bezüglich ihrer räumlichen Anordnung und/oder ihrer Projektionsrichtung und/oder ihrer Projektionsfläche getrennt sind, jedoch von einer einzigen zentralen Lichtquelle versorgt werden.

Mindestens ein Videosignal wird entsprechend der Art der Projektionsanordnung für mehr als einen Projektor aufbereitet und den Mitteln zur Intensitätsmodulation und/oder den Mitteln zur räumlichen Lichtbündel-Modulation zugeführt, deren Anzahl der Zahl der Projektoren entspricht.

Eine Videoquelle bedeutet nicht, daß nur eine einzige Quelle zur Bilderzeugung verwendet wird, sondern, daß insbesondere auch eine der Anzahl der Projektoren entsprechende Anzahl von verschiedenen Videoquellen eingesetzt werden kann, d.h. jedem der Projektoren kann eine Videoquelle zugeordnet sein. Die Quelle kann zum Beispiel ein Fernsehsender oder ein Videorecorder sein.

Weiterhin kann die Videoinformation eines Gesamtbildes in eine der Anzahl der Projektoren entsprechende Anzahl von Videoinformationen für Einzelbilder zerlegt werden, womit jeweils einer der Projektoren angesteuert wird. Die Projektoren können dann so ausgerichtet sein, daß das Gesamtbild aus einer Projektion der Einzelbilder zusammengesetzt ist. Dabei sind die Wiedergabeeigenschaften der Projektoren für die Einzelbilder weitestgehend gleich. Es treten keine Helligkeits-, Kontrast- oder Farbunterschiede auf, die von der Lichtquelle hervorgerufen werden.

Es gibt nun mehrere prinzipielle Möglichkeiten, wie das erfindungsgemäße Projektionssystem eingesetzt werden kann:
1. Jeder der Projektoren kann ein gleiches Bild oder verschiedene Bilder zeigen, wobei die Projektoren an verschiedenen Orten angeordnet sind und diese jeweils ein Einzelbild auf jeweils eine Projektionsfläche projizieren. Mit dieser Anordnung ist es besonders kostengünstig, wenn eine Mehrzahl von Bildern, die auch einen unterschiedlichen Bildinhalt haben können, an verschiedenen Orten gezeigt werden sollen, da nur eine einzige Lichtquelle erforderlich ist. So gelingt es, daß die Kosten für die Erzeugung der erforderlichen Lichtleistung erheblich reduziert werden kann, insbesondere bei dem Einsatz von Laser-Lichtquellen.
2. Weiterhin kann jeder der Projektoren ein Einzelbild erzeugen, das Bestandteil eines großen Gesamtbildes ist. Mit den Einzelbildern wird auf einer einzigen Projektionsfläche ein großes Gesamtbild zusammengesetzt, wenn die Projektoren entsprechend zur Projektionsfläche ausgerichtet sind. Hier kommt vor allem der Vorteil zur Wirkung, daß alle Einzelbilder durch Projektoren erzeugt werden, die in ihren Eigenschaften eine gleiche Helligkeit, einen gleichen Kontrast und eine gleiche Farbwirkung aufweisen.
3. Jeder der Projektoren ist auf eine einzige Projektionsfläche so ausgerichtet, daß sich die verschiedenen Einzelbilder auf der einen Projektionsfläche überlagern können. So sind zum Beispiel mit drei monochromen Projektoren, die Bilder in den Primärfarben liefern, Farbbilder erzeugbar oder es wird durch Anwendung des Polarisationsverfahrens oder durch Anwendung des Farbenverfahrens ein stereoskopischer Bildeindruck erzeugt.

Das Mittel zur Aufteilung des Lichtbündels ist aus einer Kombination von teillichtdurchlässigen Spiegeln und/oder chromatischen Spiegeln und/oder Teilerwürfeln und/oder optischen Gittern und/oder optischen Polarisatoren aufgebaut. Diese Mittel müssen die Eigenschaft haben daß das aus der Lichtquelle ausfallende Lichtbündel in Teil-Lichtbündel aufgeteilt wird, die in verschiedenen in verschiedenen Teil-Strahlengängen geführt werden, und die hinsichtlich ihrer Intensität und/oder Phasenlage und/oder der Polarisationsrichtung und/oder Wellenlänge aufgeteilt sind. In den Ausführungsbeispielen werden einige dieser Mittel näher beschrieben, wobei dem Fachmann auch andere Anordnungen und Kombinationen zur Aufteilung eines Lichtbündels geläufig sind, die mit geringstem Aufwand eine möglichst gedrängte Bauweise realisieren. In der Regel werden zusätzlich Umlenkspiegel eingesetzt, um übersichtliche und räumlich gedrängte Lichtwege zu erhalten.

Das Mittel zur Aufteilung des Lichtbündels hat die Aufgabe, das von der Lichtquelle ausgehende Lichtbündel in einem vorbestimmten Verhältnis auf die Mittel zur Intensitätsmodulation aufzuteilen. Für eine Bilddarstellung mit gleichen Eigenschaften wird das Teilungsverhältnis für alle Teil-Lichtbündel gleich der Anzahl der Projektoren gewählt. Sollen unterschiedlich helle Bilder und/oder Bilder mit einem verschiedenen Farbeindruck erzeugt werden, kann das Teilungsverhältnis auch anders festgelegt werden.

Die Aufteilung ist zum Beispiel durch teillichtdurchlässige oder chromatische Spiegel zeitlich unveränderbar gegeben.

Eine Steuereinrichtung und einstellbare Mittel zur Aufteilung des Lichtbündels, wie diese zum Beispiel die Firma Laseroptik GmbH D-30826 Garbsen herstellt, erlauben es, das Teilungsverhältnis auch während der Bilddarstellung einzustellen oder zu verändern. Dabei bleibt aber bei einem einmal eingestellten Teilungsverhältnis die eingestellte Helligkeitsfunktion und der eingestellte Farbeindruck dauerhaft erhalten.

Bei den einleitend unter Punkt 1. genannten bild-abbildenden Projektoren ist das Mittel zur Intensitätsmodulation mit dem Mittel zur räumlichen Lichtbündel-Modulation identisch. Diese Mittel bilden eine interne Objektebene jedes Projektors und erzeugen dort ein Einzelbild. Diese Mittel werden durch eine LCD-Matrix oder ein DMD-Array oder eine andere nicht aktiv Licht emittierende Bildquelle realisiert.

Zu den nicht selbst Licht emittierenden Bildquellen zählen alle Mittel mit denen die Intensitätsverteilung eines aufgeweiteten Lichtbündels innerhalb seiner Querschnittsfläche beeinflußt werden kann. Hierzu zählen zum Beispiel auch Dia-Positive, Blenden, Lichtventile, hierzu zählen nicht die aktiv Licht erzeugenden Matrixen, z.B. in Form von Dioden, Transistoren oder miniaturisierten Röhren.

Das Einzelbild kann zum Beispiel bei einer LCD-Matrix direkt betrachtet werden. Um jedoch große Bilder zu erhalten, wird das in der internen Objektebene des Projektors erzeugte Einzelbild mit einem Projektionsobjektiv auf der Projektionsfläche vergrößert abgebildet.

Nur bei den bild-abbildenen Projektoren und in dem Fall, daß der Durchmesser des Teil-Lichtbündels kleiner als die Größe der geräteinternen Objektebene ist, ist nach dem Mittel zur Aufteilung im Teil-Strahlengang für jedes Teil-Lichtbündel eine der Anzahl der Projektoren entsprechende Anzahl von Einrichtungen zur Aufweitung angeordnet, dessen jede ein Teil-Lichtbündel auf die Größe der internen Objektebene des jeweiligen Projektors aufweitet. Die Aufweitung der Teil-Lichtbündel auf die jeweilige Größe der internen Objektebene ermöglicht deren Ausleuchtung mit einem Teil-Lichtbündel, welches gleiche Eigenschaften hat wie die anderen Teil-Lichtbündel für die anderen Projektoren.

Bei dem einleitend unter Punkt 2. genannten Laser-Projektor ist das Mittel zur räumlichen Lichbündel-Modulation ein zweiachsig wirkendes Ablenksystem, mit dem das jeweilige Teil-Lichtbündel in Zeilenrichtung und Bildrichtung abgelenkt wird. Dieses geschriebene Teil-Lichtbündel erzeugt auf der Projektionsfläche dicht aneinander gereihte Zeilen, die vom Betrachter als Bild wahrgenommen werden.

Zweiachsige Ablenksysteme sind insbesondere die Kombination aus einem Polygonspiegel zur Zeilenablenkung und einem Kippspiegel zur Bildablenkung. Ein zweiachsiges Ablenksystem läßt sich vorteilhaft auch durch die zweifache Anordnung der genannten Mittel realisieren. Ein zweiachsig wirkendes Ablenksystem kann jedoch auch aus den in der WO 96/25009 genannten Mitteln aufgebaut sein, die steuerbar sind. Wesentlich ist, daß hier ein Lichtbündel nur in seiner Strahlrichtung moduliert wird.

Bei Projektoren, die mit einem schreibenden Lichtbündel arbeiten, sind die Mittel zur Intensitätsmodulation insbesondere elektrooptische oder akustooptische Modulatoren. Diese Modulatoren erzeugen durch eine relativ einfache elektrische Ansteuerung ein helligkeitsmoduliertes Teil-Lichtbündel.

Die Intensitäts- oder Amplitudenmodulation des Lichtes kann weiterhin auch nach einem der Prinzipien erfolgen, die in der WO 96/25009 genannt wurden.

Als Lichtquelle kommen in dieser Erfindung zwei Klassen zum Einsatz:

Die Lichtquelle ist in einem ersten Fall eine Strahlungsquelle, die eine räumlich ausgedehnte Lichtstärkeverteilungskurve hat. Realisierungen dieser Strahlungsquellen sind Temperaturstrahler, z.B. eine Halogenlampe oder Lumineszenzstrahler, z.B. Lumineszenz-Dioden.

Die Lichtquelle ist in einem zweiten Fall eine Strahlungsquelle, die ein nahezu paralleles Lichtbündel abstrahlt. Nach den heutigen Stand der Technik ist diese Strahlungsquelle insbesondere eine Laser-Lichtquelle.

Es hat sich bei Videoprojektionssystemen gezeigt, daß die Laser-Lichtquellen besonders geeignet sind, die die Eigenschaft haben, daß die Divergenz des Lichtbündels beugungsbegrenzt ist.

Das erfindungsgemäße Videoprojektionssystem ist insbesondere auch für farbige Bilddarstellungen geeignet. Ein derartiges Videoprojektionssystem ist in einem ersten Fall dadurch gekennzeichnet, daß nach der Lichtquelle ein Strahlengang für ein Lichtbündel vorliegt, das die Primärfarben Rot, Grün und Blau enthält, in diesem Strahlengang das Mittel zur Aufteilung angeordnet ist, das das Lichtbündels in eine der Anzahl der Projektoren entsprechende Anzahl von Teil-Lichtbündeln und aus diesen in jeweils weitere drei Teil-Lichtbündel, die je eine der Primärfarben Rot, Grün und Blau enthalten, aufteilt, deren jedes einen Teil-Strahlengang aufweist und nachfolgend in jedem Teil-Strahlengang ein Mittel zur Intensitätsmodulation angeordnet ist, weiterhin jeweils drei Teil-Strahlengänge, in denen jeweils eines der Teil-Lichtbündel in einer der Primärfarben Rot, Grün und Blau geführt ist, einem der Projektoren zugeordnet sind und die Mittel zur Intensitätsmodulation, die in diesen drei Teil-Strahlengängen angeordnet sind, von einem Farb-Video-Signal einer Videoquelle angesteuert werden.

Ein Videoprojektionssystem zur Darstellung farbiger Bilder ist in einem zweiten Fall dadurch gekennzeichnet, daß nach der Lichtquelle räumlich getrennte Strahlengänge für die Lichtbündel in den Primärfarben Rot, Grün und Blau vorliegen und in diesen drei Strahlengängen das Mittel zur Aufteilung der drei Lichtbündel angeordnet ist, das jedes der drei Lichtbündel in eine der Anzahl der Projektoren entsprechende Anzahl von Teil-Lichtbündeln aufteilt, deren jedes einen Teil-Strahlengang aufweist und nachfolgend in jedem Teil-Strahlengang ein Mittel zur Intensitätsmodulation angeordnet ist, weiterhin jeweils drei Teil-Strahlengänge, in denen jeweils eines der Teil-Lichtbündel in einer der Primärfarben Rot, Grün und Blau geführt ist, einem der Projektoren zugeordnet sind und die Mittel zur Intensitätsmodulation, die in diesen drei Teil-Strahlengängen angeordnet sind, von einem Farb-Video-Signal einer Videoquelle angesteuert werden.

Bei dem letztgenannten Fall ist die Lichtquelle entweder eine Strahlungsquelle, aus der die Lichtanteile Rot, Grün und Blau in getrennte Strahlengänge aufgeteilt werden oder die Lichtquelle ist aus drei Strahlungsquellen aufgebaut, die jeweils eine der Farben Rot, Grün und Blau in einem eigenen Strahlengang erzeugen.

Zum Erreichen möglichst gleicher und dauerhafter Eigenschaften der Bildwiedergabe ist im Sinne der Erfindung die Verwendung einer Lichtquelle, die eine Rot-Grün-Blau-Laser-Lichtquelle ist besonders vorteilhaft.

Temperaturstrahler liefern ein kontinuierliches Spektrum, aus dem nur die drei Spektralbereiche für die Primärfarben heraus gefiltert werden müssen. Temperaturstrahler arbeiten prinzipiell immer mit erheblichen Energieverlusten, vor allem in Form von Wärme. Eine Rot-Grün-Blau-Laser-Lichtquelle liefert dagegen nur drei Lichtanteile innerhalb eines auf wenige Nanometer begrenzten Wellenlängenbereiches. Die Wellenlängen des Laserlichtes beruhen auf den Eigenschaften eines Laser-Materials und können zeitlich sehr konstant gehalten werden.

Die Anteile der Leistung für jede der Primärfarben wird durch eine elektronische Regelung zeitlich sehr stabil eingestellt. Zum Beispiel erfordert der Weißabgleich der Lichtquelle eines Projektors bezogen auf die tageslicht-äquivalente Normlichtart D 65 Leistungsanteile von 100% für Rot (632 nm), 95,3% für Grün (532 nm) und 67,9% für Blau (445 nm).

Nur bei den einleitend unter Punkt 1. genannten bild-abbildenden Projektoren und in dem Fall, daß der Durchmesser des Teil-Lichtbündels kleiner als die Größe der geräteinternen Objektebene ist, ist nach dem Mittel zur Aufteilung in jedem Teil-Strahlengang für jedes Teil-Lichtbündel in den Primärfarben eine Einrichtung zur Aufweitung angeordnet, dessen jede ein Teil-Lichtbündel in den Primärfarben auf die Größe der internen Objektebene des jeweiligen Projektors aufweitet.

Bei den beiden Varianten des Videoprojektionssystems für eine farbige Bilddarstellung ist es eine zweckmäßige Ausgestaltung, wenn die drei Teil-Lichtbündel, die einem Projektor und einem farbigen Einzelbild zugeordnet sind, einem Mittel zur Überlagerung zugeführt und die räumlich zusammengefaßten Teil-Lichtbündel zur Darstellung jeweils eines farbigen Einzelbildes auf die Projektionsfläche projiziert werden.

Dabei bedeutet "Überlagerung" der Teil-Lichtbündel auf der Projektionsfläche nicht, daß die Überlagerung der Teil-Lichtbündel unmittelbar auf der Projektionsfläche erfolgen muß, sondern daß die Überlagerung der Teil-Lichtbündel im Bereich zwischen den Mitteln zur Intensitätsmodulation und der Projektionsfläche erfolgen kann. Wesentlich ist, daß unabhängig vom Ort der Überlagerung im Ergebnis dieser Überlagerung aus den verschiedenfarbigen Teil-Lichtbündel auf der Projektionsfläche ein zusammengesetztes Farbbild entsteht. Die Überlagerung der verschieden farbigen Teil-Lichtbündel in den drei Teil-Strahlengängen zu einem farbigen Einzelbild erfolgt:
1. durch Überlagerung der drei verschieden farbigen Teil-Lichtbündel in den Primärfarben für ein Einzelbild durch einen Farbbild-Projektor, der in sich drei Projektionskanäle zur Bildwiedergabe enthält, die auf die Projektionsfläche des Einzelbildes ausgerichtet sind, unmittelbar auf dieser Projektionsfläche.
   Hier besteht das Problem, daß es schwierig ist und einen hohen Aufwand zur Justage erfordert, um die drei Einzelbilder in den Primärfarben eines Projektionskanals auf der Projektionsfläche wirklich in vollständige Überdeckung zu bringen.
2, durch Überlagerung von drei verschiedenfarbigen Bildern in Primärfarben für ein Einzelbild im Strahlengang zwischen den Mitteln zur räumlichen Lichtbündel-Modulation und der Projektionsfläche.
3. durch Überlagerung von drei verschieden farbigen Teil-Lichtbündeln in den Primärfarben für ein Einzelbild im Strahlengang zwischen den Mitteln zur Intensitätsmodulation und den Mitteln zur räumlichen Lichtbündel-Modulation.

Weiterhin ist die Anzahl der Farbanteile nicht auf die drei Primärfarben beschränkt. Dies ist nur eine besonders zweckmäßige Ausgestaltung, da mit den drei Primärfarben alle anderen Farbvalenzen erzeugt werden können, die in dem durch die Primärfarben gebildeten Farbdreieck liegen. Die Erfindung ist jedoch auch mit zwei Farben oder mit drei anderen Farben als den Primärfarben realisierbar, dann entsteht kein vollwertiges Farbbild, oder mit mehr als drei Farben realisierbar, dann steigt der Aufwand.

Nur bei den einleitend unter Punkt 1. genannten bild-abbildenden Projektoren ist nach den geräteinternen Objektebenen, die Einzelbilder in den Primärfarben erzeugen und die einem der Projektoren für ein farbiges Einzelbild zugeordnet sind, in den drei Teil-Strahlengängen das Mittel zur Überlagerung angeordnet, das die drei Einzelbilder in den Primärfarben zu einem farbigen Einzelbild zusammenfügt.

Dagegen ist es bei den einleitend unter Punkt 2, genannten Laser-Projektoren besonders vorteilhaft, daß nach den drei Mitteln zur Intensitätsmodulation die einem der Projektoren zugeordnet sind, in den drei Teil-Strahlengängen das Mittel zur Überlagerung angeordnet ist, das die drei Teil-Lichtbündel in den Primärfarben in einem gemeinsamen Strahlengang vereinigt und nachfolgend das Mittel zur räumlichen Lichtbündel-Modulation angeordnet ist.

Hier gibt es keinerlei Probleme bei der Überlagerung der drei Teil-Lichtbündel in den Primärfarben, da räumliche Vereinigung vor dem Mittel zur räumlichen Lichtbündel-Modulation erfolgt und somit keine Konvergenzprobleme auf der Projektionsfläche auftreten können. Jedoch kann auch bei den Laser-Projektoren eine der vorhergehend beschriebenen Arten der Überlagerung der verschiedenfarbigen Lichtbündel erfolgen: auf der Projektionsfläche selbst oder nach den Mitteln zur räumlichen Lichtbündel-Modulation durch Überlagerung der verschiedenfarbigen Bilder.

Bei den einleitend unter Punkt 2. genannten Laser-Projektoren beinhaltet das Mittel zur räumlichen Lichtbündel-Modulation zweckmäßiger weise eine den Ablenkwinkel verkleinernde oder vergrößernde Transformationsoptik zur Anpassung oder Einstellung der Bildgröße.

Die Vidoeprojektionseinrichtung kann weiterhin mit einer Lichtquelle ausgerüstet sein, die zeitlich aufeinander folgend Teil-Lichtbündel in den Primärfarben Rot, Grün und Blau erzeugt. Diese zeitliche Aufeinanderfolge der Teil-Lichtbündel kann auch durch die Mittel zur Aufteilung erzeugt werden. Somit ist eine zeitmultiplexe Arbeitsweise zur Darstellung von farbigen Einzelbildern gegeben und die Mittel zur Intensitätsmodulation und die Mittel zur räumlichen Modulation werden entsprechend der Videosignale angesteuert. Diese Videosignale sind für den Zeitmultiplexbetrieb entsprechend aufbereitet. Diese Art der Bilderzeugung ist insbesondere bei den bild-abbildenden Projektoren vorteilhaft, da hier der Aufwand der Justage für jeden Farbkanal reduziert wird. Diese zeitmultiplexe Arbeitsweise hat weiterhin den allgemeinen Vorteil, daß die Zahl der Baugruppen um fast zwei drittel reduziert werden kann.

Für viele Anwendungen ist es erforderlich oder zweckmäßig, die eine Lichtquelle von den Projektoren zu trennen, bzw. die Projektoren räumlich relativ weit auseinander und/oder örtlich flexibel aufzustellen. Zu diesem Zweck ist in jedem der Teil-Strahlengänge in einem Teilbereich zwischen den Mitteln zur Aufteilung des Lichtbündels und den Mitteln zur räumlichen Lichtbündel-Modulation eine Lichtleitfaser-Verbindung hergestellt. Wichtig ist, daß jedes Teil-Lichtbündel möglichst vollständig in eine oder mehrere Lichtleitfasern eingekoppelt und aus diese ausgekoppelt werden kann.

Bei Projektoren, die mit einem schreibenden Laser-Lichtbündel arbeiten, ist die Lichtleitfaser-Verbindung besonders günstig im Teil-Strahlengang zwischen dem Mittel zur Intensitätsmodulation und dem Mitteln zur räumlichen Lichtbündel Modulation herstellbar.

Die Lichtleitfaserverbindung kann aber auch zwischen dem Mitteln zur Aufteilung und dem Mittel zur Intensitätsmodulation erfolgen.

Bei Videoprojektionssystemen die auf Basis der einleitend unter Punkt 2, genannten Laser-Projektoren farbige Bilder erzeugen, ist es besonders vorteilhaft, daß zumindest ein Abschnitt des Teil-Strahlenganges, der zwischen dem Mittel zur Überlagerung und dem Mittel zur räumlichen Lichtbündel-Modulation liegt, mit einer Lichtleitfaser-Verbindung hergestellt ist.

Es ist jedoch nicht unbedingt erforderlich, daß alle Teil-Strahlengänge eine Lichtleitfaser-Verbindung aufweisen müssen. Es ist auch eine Kombination von Lichtleitfaser-Verbindungen und anderen optischen Übertragungswegen möglich.

Weiterhin ist die Erfindung auch für ein Videoprojektionssystem vorteilhaft anwendbar, bei dem zwei Einzelbilder zur Überlagerung gebracht werden, um einen dreidimensionalen Bildeindruck zu erzeugen. Insbesondere bei dem Einsatz von Laser-Lichtquellen bieten sich zwei Verfahren an:
1. Projektion von Einzelbildern mit unterschiedlichen Polarisationsrichtungen der Lichtbündel, da Laser-Lichtquellen in der Regel polarisiertes Licht liefern und
2. Projektion von Einzelbildern mit gering unterschiedlichen Wellenlängen, die jedoch vom Auge als eine gleiche Farbe empfunden werden, da Laser-Lichtquellen in der Regel Licht einer geringen Bandbreite erzeugen.

Das Verfahren zu 1. ist zum Beispiel aus der DE 195 37 356 C1 bekannt, bei dem Bilder aus einem Projektor, der Bilder mit senkrecht aufeinander stehender Lichtpolarisation erzeugt, zur Überlagerung gebracht werden. Auch hier ist es vorteilhaft, wenn nur eine Lichtquelle Verwendung findet und die zwei Einzelbilder gleichzeitig und unabhängig voneinander auf der Projektionsfläche erzeugt werden können.

Dazu liefert die Lichtquelle Licht in mindestens zwei verschiedenen Polarisationsrichtungen, die jeweils einem Mittel zur Intensitätsmodulation zugeführt werden. Die Mittel zur Intensitätsmodulation sind hier durch eine Quelle ansteuerbar, mit der eine Bildüberlagerung zum räumlichen Sehen erzeugbar ist. Die modulierten Lichtbündel werden dann mittels eigenständiger, aufeinander abgestimmter Projektoren zur Projektionsfläche projiziert.

Die verschiedenen Polarisationsrichtungen können jedoch auch aus einer Lichtquelle gewonnen werden, die zirkular polarisierte Lichtbündel liefert, indem die Mittel zur Aufteilung des Lichtbündels die zwei unterschiedlichen Polarisationsrichtungen herstellen.

Im Gegensatz zur DE 195 37 356 C1 erfolgt hier die Erzeugung und Aufteilung der Polarisationsrichtungen vor den Mitteln zur Intensitätsmodulation. Dies hat vor allem den Vorteil, daß die Einzelbilder für das rechte Auge und das linke Auge gleichzeitig erzeugt werden. Es wird für jedes Einzelbild ein Projektor verwendet, wodurch eine Bildauflösung erzeugt wird, wie diese bei einer vergleichbaren zweidimensionalen Projektion erreichbar ist.

Das Verfahren zu 2. ist zum Beispiel aus der DE 198 08 264 A1 bekannt, bei dem Bilder aus einem Projektor, der Bilder mit verschiedenen schmalbandigen Lichtwellenlängenbereichen erzeugt, die zur Überlagerung gebracht werden.

Gemäß der Erfindung sind mit der Lichtquelle Lichtbündel verschiedener Wellenlänge erzeugbar, wobei zwei Lichtwellenlängen eine Wellenlängendifferenz kleiner 80 nm haben.

Durch die Mittel zur Aufteilung des Lichtbündels werden zwei Teil-Lichtbündel erzeugt und den Mitteln zur Intensitätsmodulation zugeführt, die durch eine Quelle ansteuerbar sind, mit der eine Bildüberlagerung zum "räumlichen Sehen" herstellbar ist. Die modulierten Lichtbündel werden dann mittels eigenständiger, aufeinander abgestimmter Projektoren zur Projektionsfläche projiziert.

Durch die erfindungsgemäße Anordnung und ihre Ausgestaltungen erfolgt in jedem Fall eine Aufteilung der Lichtbündel einer Lichtquelle in Teil-Lichtbündel. Mit dieser Maßnahme ist eine erhebliche Kostenreduzierung gegenüber bekannten Anordnungen verbunden.

Mit dem Mittel zur Intensitätsmodulation und/oder dem Mittel zur räumlichen Lichtbündel-Modulation erfolgt die Wandlung der elektronischen Videoinformationen in optische Videoinformationen, mit denen aus mehreren örtlich unabhängig aufstellbaren Projektoren Bilder erzeugt werden. Bei der Verwendung von Laser-Lichtquellen zur Erzeugung der Rot-Grün-Blau-Lichtbündel ergeben sich ganz besondere Vorteile. Die vorbestimmten Wellenlängen der Laser-Lichtquellen können über die gesamte Lebensdauer der Lichtquelle stabil eingehalten werden. Damit können die Farbwiedergabeeigenschaften in den Projektoren zeitlich unveränderlich und identisch hergestellt werden. Alle verwendeten optischen Bauelemente wie Umlenkspiegel, teillichtdurchlässige Spiegel, chromatische Spiegel sind optisch passive Bauteile, deren Funktion weder leistungsabhängig noch zeitlich veränderbar sind.

Die Videoprojektionssysteme, die mehr als einen Projektor verwenden, können einfacher aufgebaut werden. Mit dem erfindungsgemäßen Systemansatz gelingt es auch, die Kosten des Betriebes und der Wartung derartiger Videoprojektionssysteme drastisch zu reduzieren.

Die Erfindung wird nachfolgend an Hand von Figuren beschrieben. Es zeigen:
- Fig. 1: ein erfindungsgemäßes Videoprojektionssystem zur Projektion von drei Bildern, die mit schreibenden Laser-Lichtbündeln erzeugt werden;
- Fig. 2: ein erfindungsgemäßes Videoprojektionssystem zur Projektion von drei Bildern, die mit einer bild-abbildenden Projektion erzeugt werden, mit einer Laser-Lichtquelle und mit Lichtleitfaser-Verbindungen;
- Fig. 3: ein erfindungsemäßes Videoprojektionssystem zur Projektion von vier Farbbildern mit schreibenden Lichtbündeln aus einer R-G-B-Laser-Lichtquelle;
- Fig. 4: ein erfindungsgemäßes Videoprojektionssystem zur Projektion von vier Farbbildern mit schreibenden Lichtbündeln aus einer Rot-Laser-Lichtquelle, einer Grün-Laser-Lichtquelle und einer Blau-Laser-Lichtquelle;
- Fig. 5: ein erfindungsgemäßes Videoprojektionssystem zur Projektion von vier Farbbildern mit einer zeitmultiplexen Projektion;
- Fig. 6: ein erfindungsgemäßes Videoprojektionssystem zur Projektion von Bildern, die einen räumlichen Bildeindruck liefern, und
- Fig. 7: eine Steuereinrichtung für ein erfindungsgemäßes Videoprojektionssystem zur Projektion von mehr als einem Bild.

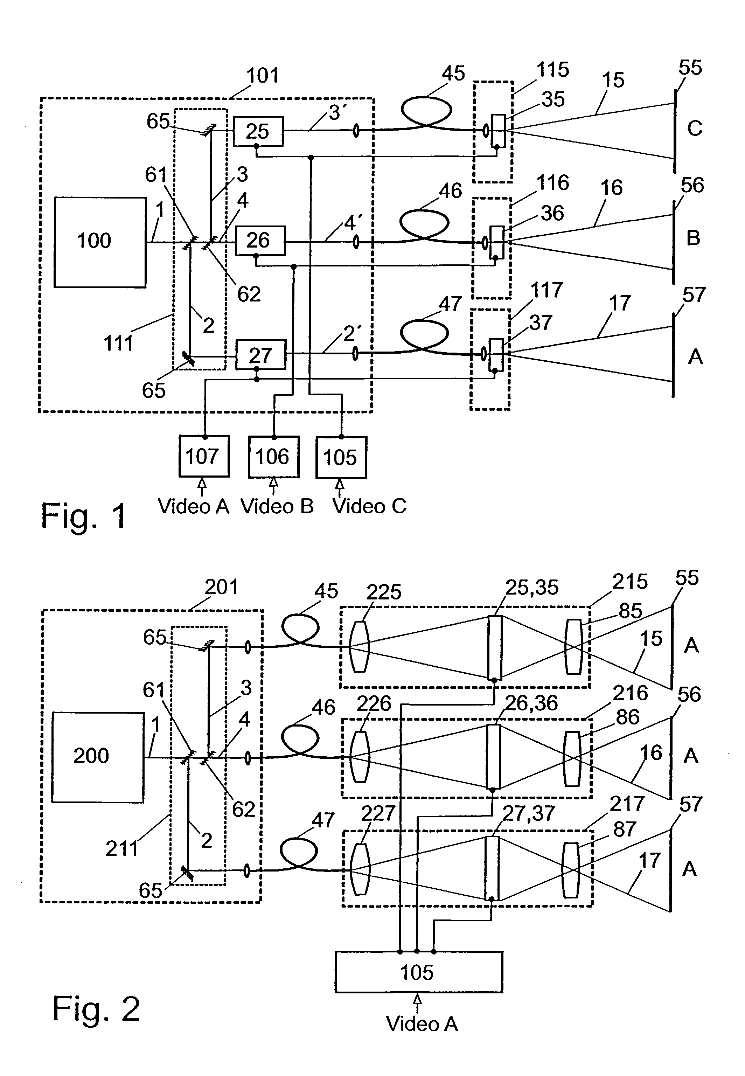

Fig. 1 zeigt ein Videoprojektionssystem zur Projektion von drei Bildern, wobei die Bilder A, B und C mit schreibenden Lichtbündeln erzeugt werden. Zwischen einer intensitätsmodulierbaren Mehrfach-Lichtquelle 101 und drei Projektoren 115, 116 und 117 erfolgt die Übertragung der die optischen Signale tragenden Teil-Lichtbündel 2', 3' und 4' mittels Lichtleitfaser-Verbindungen 45, 46 und 47. Die drei Projektoren 115, 116 und 117 sind zu jeweils einer Projektionsfläche 55, 56 und 57 ausgerichtet.

Weiterhin bestehen elektrische Verbindungen zwischen der intensitätsmodulierbaren Mehrfach-Lichtquelle 101, den Projektoren 115, 116 und 117 und jeweils einer zugehörigen Steuerelektronikeinheit 105 für einen Videokanal C, 106 für einen Videokanal B und 107 für einen Videokanal A.

Mit dieser Lösung wird erreicht, daß drei Bildprojektionen unabhängig voneinander in Richtung, Lage, Größe und Inhalt der Bilder aufgestellt werden können. Dabei sind die Aufstellungsorte der Projektoren 115, 116 und 117 und der ihnen zugeordneten Projektionsflächen 55, 56 und 57 relativ unabhängig voneinander wählbar. Zwischen den drei Projektoren 115, 116 und 117 können problemlos Entfernungen von 60 Metern realisiert werden. Dabei sollte die maximale Entfernung der Projektoren 115, 116 und 117 zur intensitätsmodulierbaren Mehrfach-Lichtquelle 101 wegen der zu Intensitätsverlusten führenden optischen Dämpfung heute gebräuchlicher Lichtleitfasern nicht sehr viel größer als 30 Meter sein.

Die intensitätsmodulierbare Mehrfach-Lichtquelle 101 besteht im Beispiel nach Fig. 1 aus einer Lichtquelle 100, einem Mittel zur 3-fachen Aufteilung 111 des Lichtbündels 1 und drei Mitteln zur Intensitätsmodulation 25, 26 und 27. Das aus der Lichtquelle 100 austretende Lichtbündel 1 wird durch das Mittel zur Aufteilung 111 in drei Teil-Lichtbündel 2, 3 und 4 gleicher Intensität aufgeteilt, d.h. jedes des Teil-Lichtbündel 2, 3 und 4 hat 1/3 der Intensität des Lichtbündels 1. Die Teil-Lichtbündel 2, 3 und 4 dienen zur Erzeugung jeweils eines Einzelbildes A, B und C auf den Projektionsflächen 55, 56 und 57.

Die Lichtquelle 100 ist im Beispiel eine monochromatische Laser-Lichtquelle mit der Wellenlänge 532 nm. Die Mittel zur 3-fachen Aufteilung 111 des Lichtbündels 1 sind im Beispiel teillichtdurchlässige Spiegel, ein 33% Teilungsspiegel 61 und ein 50% Teilungsspiegel 62, die im Strahlengang des Lichtbündels 1 nacheinander angeordnet sind. Die Teil-Lichtbündel 2 und 3 werden hier mit Umlenkspiegeln 65 um 90° umgelenkt. Die Teil-Lichtbündel 2, 3 und 4 werden jeweils einem Mittel zur Intensitätsmodulation 25, 26 und 27 zugeführt. Die Mittel zur Intensitätsmodulation sind im Beispiel akustooptische Modulatoren. Die drei unabhängig arbeitenden Mittel zur Intensitätsmodulation 25, 26 und 27 erhalten von jeweils einer der Steuerelektronikeinheiten 105, 106 und 107 elektrische Signale, die den Bildinformationen der Einzelbilder entsprechen, die auf den Projektionsflächen 55, 56 und 57 dargestellt werden sollen. Die elektrischen Signale zur Intensitätsmodulation werden aus den Videosignalen A, B, C gewonnen.

In DE 195 17 356 C1 ist zum Beispiel beschrieben, wie die Videodaten verarbeitet werden und wie die Ansteuerung der Modulatoren erfolgen kann.

In Lichtrichtung gesehen ist nach den Mitteln zur Intensitätsmodulation 25, 26 und 27 jeweils ein Lichteintrittsende der Lichtleitfaser-Verbindungen 45, 46 und 47 in einem optischen Strahlengang angeordnet. In die Lichteintrittsenden wird jeweils eines der modulierten Teil-Lichtbündel 2', 3' und 4' eingekoppelt. Jede Lichtleitfaser-Verbindung 45, 46 und 47 besteht im Beispiel aus einer Einkoppeloptik an dem Lichteintrittsende, einer Multimode-Lichtleitfaser und einer Auskoppeloptik an einem Lichtaustrittsende der Lichtleitfaser. Zum Beispiel wird in der DE 196 16 843 A1 beschrieben, wie so eine Lichtleitfaser-Verbindung für ein Videoprojektionssystem ausgeführt werden kann.

Die Lichtaustrittsenden der Lichtleitfaser-Verbindungen 45, 46 und 47 sind mit jeweils einem der Projektoren 115, 116 und 117 verbunden. Jeder der Projektoren 115, 116 und 117 enthält in diesem Beispiel ein Mittel zur räumlichen Lichtbündel-Modulation 35, 36 oder 37. Die aus den Lichtleitfaser-Verbindungen 45, 46 und 47 austretenden Teil-Lichtbündel werden jeweils auf ein Mittel zur räumlichen Lichtbündel-Modulation 35, 36 und 37 gerichtet. Die Mittel zur räumlichen Lichtbündel-Modulation bestehen im Beispiel aus einem drehenden Polygonspiegel zur Zeilenablenkung und einem Kippspiegel zur Bildablenkung. In DE 43 24 849 C2 ist eine derartige Anordnung beschrieben, wobei dort, nach den beiden Ablenkspiegeln, eine Transformationsoptik zur Vergrößerung der Ablenkwinkel der Lichtbündel vorgesehen ist. Falls die Transformationsoptik erforderlich ist, kann diese auch hier Bestandteil jedes Mittels zur räumlichen Lichtbündel-Modulation sein. Jedes in Zeilenrichtung und Bildrichtung abgelenkte Teil-Lichtbündel 15, 16 und 17 erzeugt ein Einzelbild A, B und C.

Fig. 2 zeigt ein Videoprojektionssystem zur Projektion von drei Einzelbildern A, B und C, die mit LCD-Matrixen erzeugt werden. Projektoren, die mit LCD-Matrixen arbeiten werden der Gruppe der bild-abbildenden Projektoren zugeordnet. Auch in diesem Beispiel wird eine Laser-Lichtquelle als Lichtquelle 200 verwendet und es werden die Lichtleitfaser-Verbindungen 45, 46, und 47 in den optischen Kanälen eingesetzt. Das Videoprojektionssystem besteht hier aus der (nicht intensitätsmodulierbaren) Mehrfach-Lichtquelle 201, die die drei Teil-Lichtbündel 2, 3 und 4 erzeugt, und aus drei Projektoren 215, 216 und 217, die zu jeweils einer der Projektionsflächen 55, 56 und 57 ausgerichtet sind. Die optischen Verbindungen zwischen der Mehrfach-Lichtquelle 201 und den drei Projektoren 215, 216 und 217 werden durch die drei Lichtleitfaser-Verbindungen 45, 46 und 47 hergestellt. Auch mit dieser Lösung wird erreicht, daß drei Bildprojektionen unabhängig voneinander in Richtung, Lage, Größe und Inhalt der Einzelbilder realisiert werden können.

Dabei sind die Aufstellungsorte der Projektoren 215, 216 und 217 und der ihnen zugeordneten Projektionsflächen 55, 56 und 57 ebenso, wie zu Fig. 1 beschrieben, relativ unabhängig voneinander wählbar.

Die Mehrfach-Lichtquelle 201 besteht im Beispiel gemäß Fig. 2 nur aus der einen Lichtquelle 200 und den Mitteln zur 3-fachen Aufteilung 211. Das aus der Lichtquelle 200 austretende Lichtbündel 1 wird durch die Mittel zur Aufteilung in drei Teil-Lichtbündel 2, 3 und 4 gleicher Intensität aufgeteilt, d.h. jedes der Teil-Lichtbündel 2, 3 und 4 hat 1/3 der Intensität des Lichtbündels 1. Die Lichtquelle 200 ist im Beispiel eine Laser-Lichtquelle mit der Wellenlänge 532 nm. Die Mittel zur Aufteilung des Lichtbündels 1 sind der 33% Teilungsspiegel 61 und der 50% Teilungsspiegel 62, die im Strahlengang des Lichtbündels 1 nacheinander angeordnet sind.
Die Teil-Lichtbündel 2, 3 und 4 werden hier in jeweils eines der Lichteintrittsenden der Lichtleitfaser-Verbindungen 45, 46 und 47 mittels der Umlenkspiegel 65 und der Einkoppeloptik eingekoppelt.

Die Lichtaustrittsenden der Lichtleitfaser-Verbindungen 45, 46 und 47 sind mit jeweils einem der Projektoren 215, 216 und 217 verbunden. Jeder der Projektoren 215, 216 und 217 enthält in diesem Beispiel eine Optik zur Aufweitung 225, 226 und 227 für die Teil-Lichtbündel 2, 3 und 4, das Mittel zur Intensitätsmodulation 25, 26 und 27, das Mittel zur räumlichen Lichtbündel-Modulation 35, 36 und 37 und eine Projektionsoptik 85, 86 und 87. Die Teil-Lichtbündel 15, 16 und 17 beinhalten hier zu jedem Zeitpunkt die Bildinformation für die vollständige Größe des Einzelbildes.

Hervorgehoben werden muß, daß hier die Mittel zur Intensitätsmodulation 25, 26 und 27 mit dem zugehörigen Mittel zur räumlichen Lichtbündel-Modulation 35, 36 oder 37 zusammenfallen und identisch sind. Im Beispiel sind diese Mittel durch LCD-Matrixen realisiert. Jede LCD-Matrix ist vor dem objektseitigen Brennpunkt der Projektionsoptik 85, 86 und 87 angeordnet. Die LCD-Matrix wird durch die Steuerelektronik 105 so angesteuert, daß diese das gesamte darzustellende Bild in einer geräteinternen Objektebene zeigt, das mittels der Projektionsoptik 85, 86 und 87 auf die Projektionsfläche 55, 56 und 57 projiziert wird. In diesem Beispiel ist nur eine Steuerelektronik 105 vorgesehen, die das eine Videosignal A verarbeitet. Somit werden auf die Projektionsflächen 55, 56 und 57 gleiche Einzelbilder projiziert. Jedes Einzelbild wird zum Beispiel in einem anderen Raum gezeigt.

Die optischen Bauelemente zur Aufweitung 225, 226 und 227 der Teil-Lichtbündel sind erforderlich, damit die aus den Lichtleitfasern austretenden Teil-Lichtbündel soweit aufgeweitet werden können, daß das Bildfeld der LCD-Matrix vollständig und möglichst gleichmäßig beleuchtet werden kann. Zum Beispiel ist ein bild-abbildendes Projektionssystem, das mit einem aufgeweiteten Laser-Lichtbündel arbeitet aus der EP 0 589 179 bekannt. Dort wird als Mittel zur Intensitätsmodulation und als Mittel zur räumlichen Lichtbündel-Modulation ein DMD-Array eingesetzt.

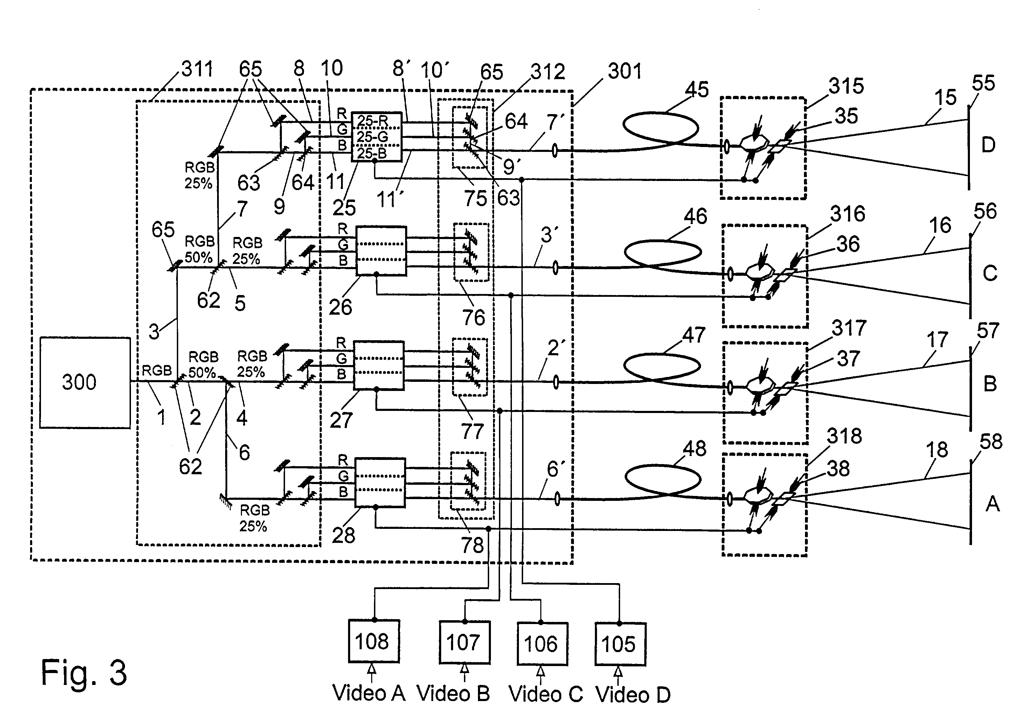

Fig. 3 zeigt das optische Design eines Videoprojektionssystems zur Projektion von vier farbigen Einzelbildern A, B, C und D mit einer intensitätsmodulierbaren Mehrfach-Lichtquelle 301.

Eine Lichtquelle 300 emittiert ein Rot-Grün-Blau-Lichtbündel 1 (R-G-B-Lichtbündel). Im Beispiel ist das ein Rot-Grün-Blau-Laser-Lichtbündel. Das Lichtbündel 1 trifft auf einen ersten teillichtdurchlässigen Spiegel 62 der die Intensität des Lichtbündels 2 in zwei Teil-Lichtbündel 2 und 3 mit je 50% der Intensität des einfallenden R-G-B-Lichtbündels 1 aufteilt. Im Strahlengang des Teil-Lichtbündels 2 ist ein zweiter teillichtdurchlässiger Spiegel 62 angeordnet, der die Teil-Lichtbündel 4 und 6 mit jeweils einem 25% Rot-Grün-Blau-Lichtanteil vom R-G-B-Lichtbündel 1 erzeugt. Der weitere Stahlenverlauf wird nachfolgend nur für die Lichtanteile für die Bilddarstellung im Video-Kanal D beschrieben. Ein Umlenkspiegel 65 lenkt das 50%-Teil-Lichtbündel 3 um 90° ab. Danach fällt das Teil-Lichtbündel 3 auf einen weiteren teildurchlässigen Spiegel 62. Es entstehen die Teil-Lichtbündel 5 und 7, die je 25% der Intensität des R-G-B-Lichtbündels 1 aufweisen. Das 25%-Teil-Lichtbündel 7 fällt auf einen ersten chromatischen Spiegel 63, der ein rotes Teil-Lichtbündel 8 des Teil-Lichtbündels 7 reflektiert und ein grünes und blaues Teil-Lichtbündel 9 transmittiert. Das grüne und blaue Teil-Lichtbündel 9 trifft auf einen zweiten chromatischen Spiegel 64, der das grüne Teil-Lichtbündel 10 reflektiert und das blaue Teil-Lichtbündel 11 in das Mittel zur Intensitätsmodulation 25 transmittiert. Weitere Umlenkspiegel 65 in den Strahlengängen lenken die grünen Teil-Lichtbündel 10 und die roten Teil-Lichtbündel 9 in das Mittel zur Intensitätsmodulation 25, welches im Beispiel aus drei einzelnen, unabhängigen Intensitätsmodulatoren, einer für jede der Primärfarben, besteht.

Die hier beschriebene Aufteilung des Lichtbündels für den Video-Kanal D gilt analog für die Video-Kanäle A, B und C. Alle teillichtdurchlässigen Spiegel 62, Umlenkspiegel 65 und die chromatischen Spiegel 63 und 64, die der Aufteilung des Lichtbündels 1 dienen, sind in einem Mittel zur 4-fachen Aufteilung 311 des R-G-B-Lichtbündels 1 zusammengefaßt.

Dem roten Teil-Lichtbündel 8, dem grünen Teil-Lichtbündel 10 und dem blauen Teil-Lichtbündel 11 folgt je ein Mittel zur Intensitätsmodulation 25-R, 25-G und 25-B, wobei das Mittel zur Intensitätsmodulation 25-R mit einem Rot-Modulationssignal, ein anderes 25-G mit einem Grün-Modulationssignal und ein weiteres 25-B mit einem Blau-Modulationssignal des Video-Kanals D ansteuerbar ist.

Die Mittel zur Intensitätsmodulation für die Video-Kanäle A, B und C sind analog aufgebaut. Nach dem Mittel zur Intensitätsmodulation 25 ist in den drei Teil-Strahlengängen für die Primärfarben ein Mittel zur Überlagerung 65 angeordnet. Im Teil-Strahlengang für das intensitätsmodulierte rote Teil-Lichtbündel 8' ist ein Umlenkspiegel 65 angeordnet. In diesem Teil-Strahlengang folgt ein chromatischer Spiegel 64, der das intensitätsmodulierte rote Teil-Lichtbündel 8' transmittiert und das intensitätsmodulierte grüne Teil-Lichtbündel 10' reflektiert. Im Teil-Strahlengang des intensitätsmodulierten roten und grünen Teil-Lichtbündels 9' ist ein chromatischer Spiegel 63 angeordnet, der das intensitätsmodulierte rote und grüne Teil-Lichtbündel 9' reflektiert und das intensitätsmodulierte blaue Teil-Lichtbündel 11' transmittiert. Nach dem chromatischen Spiegel 63 erhält man ein kollineares helligkeits- und farbmoduliertes R-G-B-Teil-Lichtbündel 7' das die Helligkeit und die Farbwirkung entsprechend der in dem Farb-Video-Signal Video D enthaltenen Information hat. In entsprechender Weise erfolgt die Intensitätsmodulation (durch die Mittel zur Intensitätsmodulation 26, 27 und 28) der Lichtanteile und die Zusammenführung (durch die Mittel zur Überlagerung 76, 77 und 78) zu den kollinearen helligkeits- und farbmodulierten Teil-Lichtbündeln 2', 3' und 6' für jeden der Video-Kanäle A, B und C. Alle Umlenkspiegel 65 und chromatischen Spiegel 63 und 64, die der räumlichen Überlagerung der Teil-Lichtbündel 8', 9', 10'und 11' des Video-Kanals D dienen, sind in einem Mittel zur 3-fach-Überlagerung 75 zusammengefaßt. Die Mittel zur 3-fach-Überlagerung 75, 76, 77 und 78 für die Videokanäle D, C, B und A bilden eine Baugruppe zur Überlagerung 312 der in den Primärfarben anliegenden modulierten Teil-Lichtbündel für die vier Projektoren.

An dieser Stelle soll angemerkt werden, daß das Mittel zur Aufteilung 311 und/oder, die Mittel zur Intensitätsmodulation 25, 26, 27 und 28 und/oder die Baugruppe zur Überlagerung 312 mit den vier Mitteln zur 3-fach-Überlagerung 75, 76, 77 und 78 auf einem Träger angeordnet sind. Der Aufbau kann mittels klassischer optischer Bauelemente erfolgen oder auch durch neue integriert-optische und mikrooptische Bauelemente. In der DE 195 03 929 A1 sind vielfältige Varianten beschrieben, wie integriert-optische und mikrooptische Lösungen praktisch ausführbar sind.

Ausgangsseitig der Baugruppe zur Überlagerung 312 liegen vier R-G-B-Teil-Lichtbündel 2', 3', 6'und 7' mit jeweils einer aufgeprägten Helligkeits- und Farbinformation zur Weiterverarbeitung an, die dem jeweiligen Signal Video D, C, B oder A entspricht. Dabei werden alle Lichtbündel aus der einen Lichtquelle 300 generiert. Die R-G-B-Teil-Lichtbündel 2', 3', 6'und 7' werden durch je einen Achromat in je eine Lichtleitfaser eingekoppelt, die jeweils eine Lichtleitfaser-Verbindung 45, 46, 47 und 48 zwischen der intensitätsmodulierbaren Mehrfach-Lichtquelle 301 und vier Projektoren 315, 316, 317 und 318 herstellt.

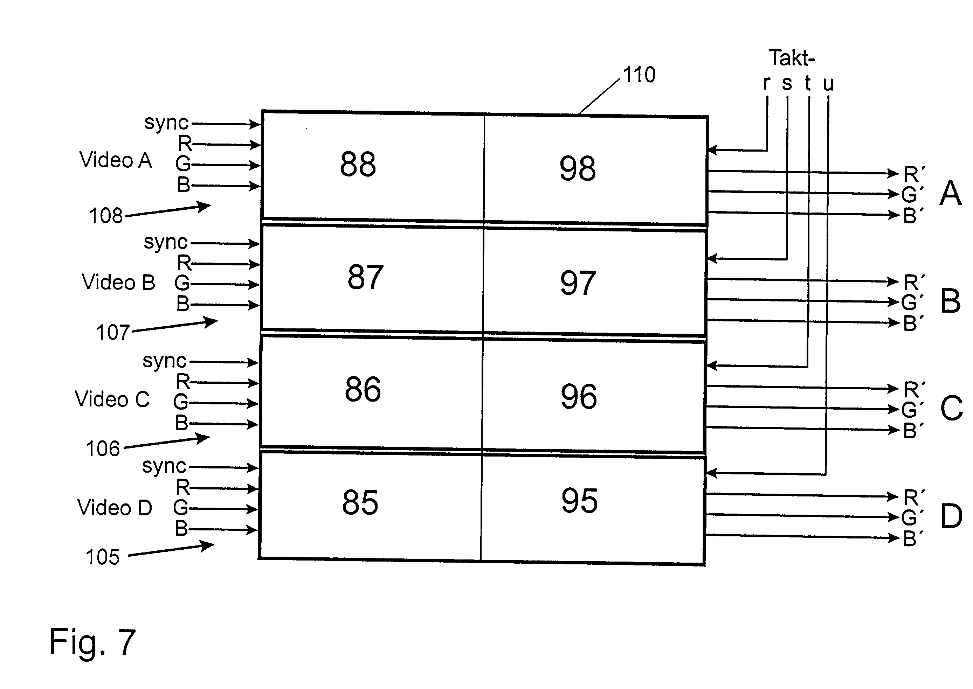

Jeder der Projektoren 315, 316, 317 und 318 enthält ein Mittel zur räumlichen Lichtbündel-Modulation 35, 36, 37 und 38 welches im Beispiel ein zweiachsiges Ablenksystem, bestehend aus einem Polygonspiegel und einem Kippspiegel, ist. Das aus der Lichtleitfaser austretende helligkeits- und farbmodulierte Lichtbündel wird mittels einer lichtbündel-formenden Optik auf einen Polygonspiegel zur Zeilenablenkung und dann auf einen Kippspiegel zur Bildablenkung gerichtet. Diese Baugruppen sind in Fig. 3 schematisch angedeutet zu sehen. Die Polygonspiegel und die Kippspiegel sind mit elektrischen Leitungen mit den zugehörigen Steuereinrichtungen 105, 106, 107, 108 verbunden. Später ist zu Fig. 7 beschrieben, wie die Verarbeitung der eingehenden Signale Video A, Video B, Video C und Video D erfolgt.

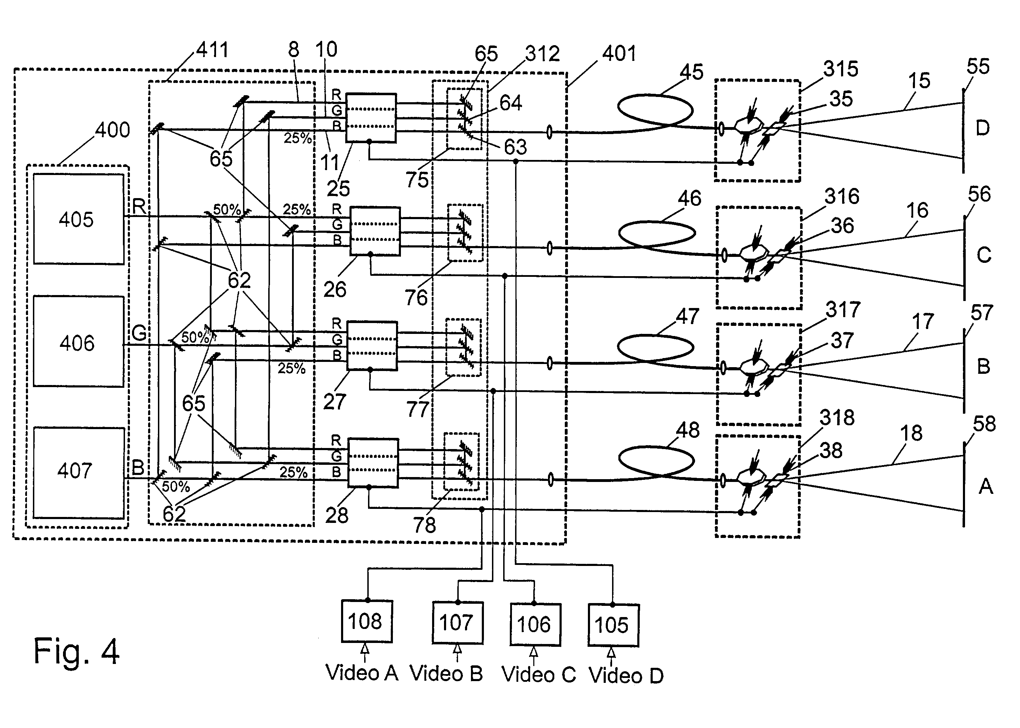

Fig. 4 zeigt ein Videoprojektionssystem zur Projektion von mehr als einem Bild wie dies im Prinzip in Fig. 3 gezeigt ist. Eine intensitätsmodulierbare Mehrfach-Lichtquelle 401 hat jedoch hier drei Laser-Lichtquellen 405, 406 und 407 und Mittel zur 4-fachen Aufteilung 411 der jeweiligen Lichtbündel in den Primärfarben Rot, Grün und Blau. Die Unterschiede zu Fig. 3 bestehen darin, daß die Laser-Lichtquelle 405 für die Farbe Rot, die Laser-Lichtquelle 406 für die Farbe Grün und die Laser-Lichtquelle 407 für die Farbe Blau vorgesehen ist. Hier liegen die drei Primärfarben in getrennten Strahlengängen vor. Daher werden keine chromatischen Spiegel zur Aufteilung in die Primärfarben benötigt. Die intensitätsmäßige Aufteilung des Lichtbündels erfolgt hier wie in Fig. 3 durch die 50% teillichtdurchlässigen Spiegel 62 und die Umlenkspiegel 65.

Hier kommen 17 Spiegel zum Einsatz; in der Lösung gemäß Fig. 3 werden 22 Spiegel benötigt, die zum Teil vergleichsweise aufwendiger sind, da diese die drei Primärfarben aufteilen müssen. In Lichtrichtung gesehen, ist das Videoprojektionssystem nach den Mitteln zur Aufteilung 411 genauso aufgebaut, wie das im Ausführungsbeispiel gemäß Fig. 3 beschrieben ist.

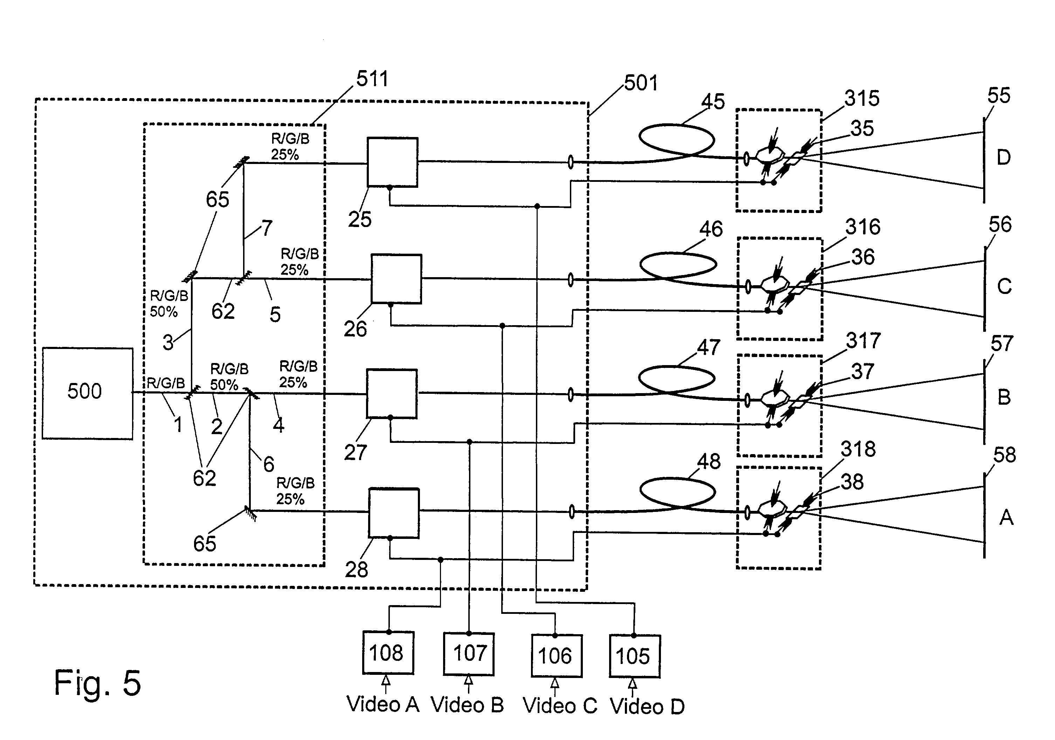

Fig. 5 zeigt ein Videoprojektionssystem zur Projektion von mehr als einem Bild, bei dem die drei Primärfarben zeitlich nacheinander den Mitteln zur Intensitätsmodulation 25, 26, 27 und 28 zugeführt werden. Eine Laser-Lichtquelle 500 ist die Strahlenquelle einer intensitätsmodulierbaren Mehrfach-Lichtquelle 501 und erzeugt zeitlich aufeinanderfolgend die Lichtanteile in den Farben Rot, Grün und Blau. Die Ansteuerung der Mittel zur Intensitätsmodulation 25, 26, 27 und 28 erfolgt im Zeitmultiplexbetrieb in Abhängigkeit vom anliegenden Videosignal A, B, C und D und den Signalen zur Synchronisation, die aus den Mitteln zur Ablenkung 35, 36, 37 und 38 der R-G-B-Teil-Lichtbündel gewonnen werden.

Die Mittel zur 4-fachen Aufteilung 511 des Lichtbündels bestehen hier nur aus drei teillichtdurchlässigen Spiegeln 62 und drei Umlenkspiegeln 65. Die übrigen Bezugszeichen benennen die gleichen Baugruppen wie in Fig. 3.

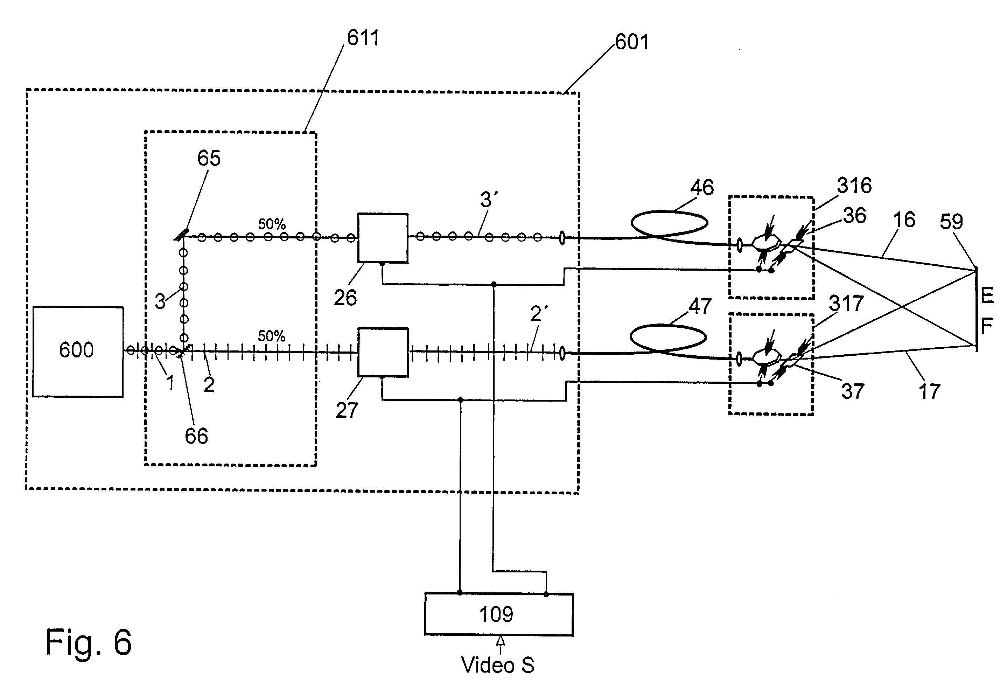

Mit den Merkmalen der Erfindung ist auch der Aufbau eines Videoprojektionssystem zur Projektion von Bildern, die einen räumlichen Bildeindruck liefern, möglich. Eine ähnliche Anordnung ist beispielsweise aus der EP 0 473 343 A1 bekannt, die jedoch nur einen Projektor verwendet. Beispielhaft ist in Fig. 6 ein Videoprojektionssystem für eine monochrome Stereo-Bilddarstellung mit zwei Projektoren 316 und 317 gezeigt, bei der ein Einzelbild E mit Licht einer vertikalen Polarisationsrichtung und ein Einzelbild F mit Licht einer horizontalen Polarisationsrichtung auf einer Projektionsfläche 59 zur Überlagerung gebracht werden. Der Betrachter trägt zum räumlichen Sehen eine Brille mit Polarisationsfiltern, die die Lichtanteile jeweils eines der Einzelbilder in jeweils eines der Betrachteraugen fallen läßt.

Das Videoprojektionssystem besteht hier aus einer Lichtquelle 600, die Licht einer Wellenlänge, jedoch mit zwei Polarisationsrichtungen erzeugt, die senkrecht aufeinander stehen. Die Lichtquelle 600 und Mittel zur Aufteilung 611 des Lichtbündels 1 bilden zusammen mit Mitteln zur Intensitätsmodulation 26 und 27 eine intensitätsmodulierbare Mehrfach-Lichtquelle 601. Ein Strahlteiler 66 trennt die vertikal polarisierten Lichtanteile von den horizontal polarisierten Lichtanteilen. Das Teilungsverhältnis des Lichtbündels 1 beträgt 50%. Nach den Mitteln zur Aufteilung 611 wird jeweils eines der Teil-Lichtbündel 2 und 3 einem der Mitteln zur Intensitätsmodulation 26 oder 27 zugeführt. Die Ansteuerung der Mittel zur Intensitätsmodulation 26 und 27 erfolgt mit einer Steuerelektronikeinheit 109, die aus einem Signal Video S die Ansteuerung der Mittel zur Intensitätsmodulation 26 und 27 vornimmt. Die übrigen Bezugszeichen bezeichnen Baugruppen, deren Wirkzusammenhang bereits zu Fig. 3 beschrieben wurde. Eine Kombination des Videoprojektionssystems gemäß Fig. 6 mit denen in der Fig. 3 oder in der Fig. 4 beschriebenen, liefert eine räumliche Darstellung farbiger Bilder.

Fig. 7 zeigt einen vierkanaligen Bildspeicher 110, wie er zum Beispiel in einer Anordnung gemäß Fig. 3 oder Fig. 4 zur Anwendung kommt, wenn vier verschiedene, farbige Einzelbilder dargestellt werden sollen. Eingangsseitig sind die Videoquellen mit ihren jeweiligen Signalen Video A, B, C und D als R-G-B-Farbsignale und den Signalen zur Synchronisation sync mit Eingangssektoren 85, 86, 87 und 88 eines Bildspeichers 110 verbunden. Ausgangsseitig sind vier mal R'-G'-B'-Farbsignale von Ausgangssektoren 95, 96, 97 und 98 abgegriffen. Die ausgansseitige Synchronisation erfolgt durch Facettentaktsignale Takt r, s, t und u, die aus der Drehstellung der entsprechenden Polygonspiegel in den Mitteln zur Ablenkung gewonnen werden. Den Eingangssektoren 85, 86, 87 und 88 sind jeweils einer der Ausgangssektoren 95, 96, 97 oder 98 zugeordnet. Der Eingangssektor 85 und der Ausgangssektor 86 sind Bestandteil der Ansteuerelektronikeinheit 105. Die anderen Sektoren sind jeweils den Ansteuerelektronikeinheiten 106, 107 oder 108 zugeordnet.

## Patentansprüche

1. Videoprojektionssystem zur Projektion von mehr als einem Bild, bei dem in Lichtrichtung eines Strahlenganges eine Lichtquelle zur Erzeugung mindestens eines Lichtbündels, Mittel zur Intensitätsmodulation und Mittel zur räumlichen Lichtbündel-Modulation, wobei diese Mittel von einem Videosignal angesteuert werden, und mindestens eine Projektionsfläche zur Darstellung einer bestimmten Anzahl (n) von Einzelbildern angeordnet sind, **dadurch gekennzeichnet, daß** das Videoprojektionssystem eine der Anzahl (n) der Einzelbilder (55, 56, 57) entsprechende Anzahl (n) Projektoren (115-117; 215-217; 315-318) umfaßt, deren jeder ein Mittel zur räumlichen Lichtbündel-Modulation (35, 36, 37) aufweist und diese Mittel mit der Lichtquelle (100; 200; 300; 400; 500; 600) optisch verbunden sind, weiterhin - in Lichtrichtung des Strahlenganges gesehen - nach der einen Lichtquelle (100; 200; 300; 400; 500; 600) ein Mittel (111;211; 311; 411; 511; 611) zur Aufteilung des Lichtbündels (1) in eine der Anzahl der Projektoren entsprechende Anzahl (n) von Teil-Lichtbündeln (2, 3, 4), deren jedes einen Teil-Strahlengang aufweist, und nachfolgend in jedem der Teil-Strahlengänge ein Mittel zur Intensitätsmodulation (25, 26, 27) angeordnet ist, wobei jeweils das Mittel zur Intensitätsmodulation (25, 26 oder 27) und das Mittel zur räumlichen Lichtbündel-Modulation (35, 36 oder 37), die in einem der Teil-Strahlengänge (15, 16 oder 17) angeordnet sind, von den Signalen (A, B, C) einer Videoquelle (105, 106, 107) angesteuert werden.

2. Videoprojektionssystem nach Anspruch 1, dadurch gekennzeichnet, daß das Mittel zur Aufteilung des Lichtbündels (111) aus teillichtdurchlässigen Spiegeln und/oder chromatischen Spiegeln und/oder Teilerwürfeln und/oder optischen Gittern und/oder optischen Polarisatoren aufgebaut ist, wobei die Teil-Lichtbündel hinsichtlich ihrer Intensität und/oder Phasenlage und/oder der Polarisationsrichtung und/oder Wellenlänge aufgeteilt sind.

3. Videoprojektionssystem nach Anspruch 1 oder 2, dadurch gekennzeichnet, daß das Mittel zur Intensitätsmodulation (25) mit dem Mittel zur räumlichen Lichtbündel-Modulation (35) identisch ist und diese Mittel in einer internen Objektebene jedes Projektors (215, 216, 217) ein Einzelbild erzeugen, wobei diese Mittel durch eine LCD-Matrix oder ein DMD-Array oder eine andere nicht aktiv Licht emittierende Bildquelle realisiert werden.

4. Videoprojektionssystem nach Anspruch 3, dadurch gekennzeichnet, daß das in der internen Objektebene des Projektors (215, 216, 217) erzeugte Einzelbild mit einem Projektionsobjektiv (85, 86 87) auf die Projektionsfläche abgebildet wird.

5. Videoprojektionssystem nach Anspruch 3, dadurch gekennzeichnet, daß nach dem Mittel zur Aufteilung (211) im Teil-Strahlengang für jedes Teil-Lichtbündel (2, 3, 4) eine der Anzahl der Projektoren entsprechende Anzahl (n) von Einrichtungen zur Aufweitung (225, 226, 227) angeordnet ist, deren jede ein Teil-Lichtbündel auf die Größe der internen Objektebene des jeweiligen Projektors (215, 216, 217) aufweitet.

6. Videoprojektionssystem nach einem der Ansprüche 1 bis 5, dadurch gekennzeichnet, daß das Mittel zur räumlichen Lichtbündel-Modulation (35, 36, 37) ein zweiachsig wirkendes Ablenksystem ist, mit dem das jeweilige Teil-Lichtbündel in Zeilenrichtung und Bildrichtung abgelenkt und ein Einzelbild auf der Projektionsfläche aufgebaut wird.

7. Videoprojektionssystem nach Anspruch 6, dadurch gekennzeichnet, daß das zweiachsige Ablenksystem aus einem Polygonspiegel zur Zeilenablenkung und einem Kippspiegel zur Bildablenkung aufgebaut ist oder jeweils einzelne der genannten Mittel in zweifacher Anordnung umfaßt.

8. Videoprojektionssystem nach Anspruch 6, dadurch gekennzeichnet, daß das Mittel zur Intensitätsmodulation (25) ein elektrooptischer Modulator oder ein akustooptischer Modulator ist.

9. Videoprojektionssystem nach einem der Ansprüche 1 bis 8, dadurch gekennzeichnet, daß die Lichtquelle (100) eine Strahlungsquelle ist, die eine räumlich ausgedehnte Lichtstärkeverteilungskurve hat, insbesondere in der Art eines Temperaturstrahlers oder in der Art eines Lumineszenzstrahlers.

10. Videoprojektionssystem nach einem der Anspruch 1 bis 8, dadurch gekennzeichnet, daß die Lichtquelle (100) eine Strahlungsquelle ist, die ein kollineares Lichtbündel abstrahlt, wobei die Strahlungsquelle insbesondere eine Laser-Lichtquelle ist, die die Eigenschaft hat, daß die Divergenz des Lichtbündels beugungsbegrenzt ist.

11. Videoprojektionssystem nach einem der Ansprüche 1 bis 10, dadurch gekennzeichnet, daß nach der Lichtquelle (300) ein Strahlengang für ein Lichtbündel (1) vorliegt, das die Primärfarben Rot, Grün und Blau enthält, in diesem Strahlengang das Mittel zur Aufteilung (311) angeordnet ist, das das Lichtbündels (1) in eine der Anzahl der Projektoren entsprechende Anzahl (n) von Teil-Lichtbündeln und aus diesen in jeweils weitere drei Teil-Lichtbündel, die je eine der Primärfarben Rot, Grün und Blau enthalten, aufteilt, deren jedes einen Teil-Strahlengang aufweist und nachfolgend in jedem Teil-Strahlengang (8, 10, 11) ein Mittel zur Intensitätsmodulation angeordnet ist, weiterhin jeweils drei Teil-Strahlengänge, in denen jeweils eines der Teil-Lichtbündel in einer der Primärfarben Rot, Grün und Blau geführt ist, einem der Projektoren (315, 316, 317, 318) zugeordnet sind und die Mittel zur Intensitätsmodulation, die in diesen drei Teil-Strahlengängen angeordnet sind, von einem Farb-Video-Signal (A, B, C oder D) einer Videoquelle (105, 106, 107 oder 108) angesteuert werden.

12. Videoprojektionssystem nach einem der Ansprüche 1 bis 10, dadurch gekennzeichnet, daß nach der Lichtquelle (400) räumlich getrennte Strahlengänge für die Lichtbündel (R, G, B) in den Primärfarben Rot, Grün und Blau vorliegen und in diesen drei Strahlengängen das Mittel zur Aufteilung (411) der drei Lichtbündel (R, G, B) angeordnet ist, das jedes der drei Lichtbündel in eine der Anzahl der Projektoren entsprechende Anzahl (n) von Teil-Lichtbündeln aufteilt, deren jedes einen Teil-Strahlengang aufweist und nachfolgend in jedem Teil-Strahlengang (8, 10, 11) ein Mittel zur Intensitätsmodulation angeordnet ist, weiterhin jeweils drei Teil-Strahlengänge, in denen jeweils eines der Teil-Lichtbündel in einer der Primärfarben Rot, Grün und Blau geführt ist, einem der Projektoren (315, 316, 317, 318) zugeordnet sind und die Mittel zur Intensitätsmodulation, die in diesen drei Teil-Strahlengängen angeordnet sind, von einem Farb-Video-Signal (A, B, C oder D) einer Videoquelle (105, 106, 107 oder 108) angesteuert werden.

13. Videoprojektionssystem nach Anspruch 12, dadurch gekennzeichnet, daß die Lichtquelle (400) eine Strahlungsquelle ist, aus der die Lichtanteile Rot, Grün und Blau in getrennte Strahlengänge aufgeteilt werden oder die Lichtquelle (400) aus drei Strahlungsquellen (405, 406, 407) aufgebaut ist, die jeweils eine der Farben Rot, Grün und Blau in einem eigenen Strahlengang erzeugen.

14. Videoprojektionssystem nach einem der Ansprüche 1 bis 13, dadurch gekennzeichnet, daß die Lichtquelle eine Rot-Grün-Blau-Laser-Lichtquelle ist.

15. Videoprojektionssystem nach Anspruch 5 und 14, dadurch gekennzeichnet, daß nach dem Mittel zur Aufteilung in jedem Teil-Strahlengang für jedes Teil-Lichtbündel in den Primärfarben eine Einrichtung zur Aufweitung angeordnet ist.

16. Videoprojektionssystem nach Anspruch 11 oder 12, dadurch gekennzeichnet, daß die drei jeweils einem Projektor zugeordneten modulierten Teil-Lichtbündel in den Primärfarben einem Mittel zur Überlagerung (75, 76, 77 oder 78) zugeführt und die räumlich zusammengefaßten Teil-Lichtbündel zur Darstellung jeweils eines farbigen Einzelbildes auf die Projektionsfläche (55, 56, 57 oder 58) projiziert werden.

17. Videoprojektionssystem nach den Ansprüchen 3 und 16, dadurch gekennzeichnet, daß nach den drei geräteinternen Objektebenen, die Einzelbilder in den Primärfarben erzeugen und die einem der Projektoren zugeordnet sind, in den drei Teil-Strahlengängen das Mittel zur Überlagerung angeordnet ist, das die drei Einzelbilder in den Primärfarben zu einem farbigen Einzelbild zusammenfügt.

18. Videoprojektionssystem nach Anspruch 16, dadurch gekennzeichnet, daß nach den drei Mitteln zur Intensitätsmodulation die einem der Projektoren zugeordnet sind, in den drei Teil-Strahlengängen das Mittel zur Überlagerung (75, 76, 77 oder 78) angeordnet ist, das die drei Teil-Lichtbündel in den Primärfarben in einem gemeinsamen Strahlengang (15) vereinigt und nachfolgend das Mittel zur räumlichen Lichtbündel-Modulation angeordnet ist.

19. Videoprojektionssystem nach Anspruch 6 oder 18, dadurch gekennzeichnet, daß das Mittel zur räumlichen Lichtbündel-Modulation (315, 316, 317 oder 318) eine den Ablenkwinkel verkleinernde oder vergrößernde Transformationsoptik beinhaltet.

20. Videoprojektionssystem nach einem der Ansprüche 1 bis 11, 13, 14 oder 19, dadurch gekennzeichnet, daß mit der Lichtquelle und/oder dem Mittel zu Aufteilung zeitlich aufeinander folgend Teil-Lichtbündel in den Primärfarben Rot, Grün und Blau in einem Teil-Strahlengang erzeugt werden und das Mittel zur Intensitätsmodulation und das Mittel zur räumlichen Lichtbündel-Modulation von den Signalen einer Farb-Videoquelle (105, 106 oder 107) angesteuert werden, die für den Zeitmultiplexbetrieb aufbereitet ist.

21. Videoprojektionssystem nach einem der Ansprüche 1 bis 20, dadurch gekennzeichnet, daß zumindest ein Abschnitt des Teil-Strahlenganges, der zwischen dem Mittel zur Aufteilung des Lichtbündels (111) und dem Mittel zur räumlichen Lichtbündel-Modulation (35, 36, 37) liegt, mit einer Lichtleitfaser-Verbindung (45, 46, 47) hergestellt ist.

22. Videoprojektionssystem nach Anspruch 6, dadurch gekennzeichnet, daß zumindest ein Abschnitt des Teil-Strahlenganges, der zwischen dem Mittel zur Intensitätsmodulation (25, 26, 27) und dem Mittel zur räumlichen Lichtbündel-Modulation (35, 36, 37) liegt, mit einer Lichtleitfaser-Verbindung (45, 46, 47) hergestellt ist.

23. Videoprojektionssystem nach Anspruch 18, dadurch gekennzeichnet, daß zumindest ein Abschnitt des Teil-Strahlenganges, der zwischen dem Mittel zur Überlagerung (75, 76, 77, 78) und dem Mittel zur räumlichen Lichtbündel-Modulation (35, 36, 37, 38) liegt, mit einer Lichtleitfaser-Verbindung (45, 46, 47, 48) hergestellt ist.

24. Videoprojektionssystem nach Anspruch 1, 11 oder 12, dadurch gekennzeichnet, daß mit der Lichtquelle (600) ein Lichtbündel (1) erzeugt wird, das mehr als eine Polarisationsrichtung hat und das Mittel zur Aufteilung Teil-Lichtbündel (2, 3) mit unterschiedlichen Polarisationsrichtungen erzeugt, deren jedes einen Teil-Strahlengang aufweist.

25. Videoprojektionssystem nach Anspruch 1, 11 oder 12, dadurch gekennzeichnet, daß mit der Lichtquelle Lichtbündel erzeugt werden, deren Wellenlängendifferenz weniger als 80 nm beträgt und das Mittel zur Aufteilung Teil-Lichtbündel erzeugt, die die unterschiedlichen Wellenlängen haben und deren jedes einen Teil-Strahlengang aufweist.
